# EUROPEAN PATENT APPLICATION

(11) **EP 3 564 143 A1**
(43) Date of publication of application: **06.11.2019**
(21) Application number: 19172556.3
(22) Date of filing: 03.05.2019
(51) Int. Cl.: B65D 3/08, B65D 3/12, B65D 5/02

(54) **A PACKAGE**

(30) Priority: 04.05.2018 EP 18170769
(71) Applicant: Tetra Laval Holdings & Finance S.A., 1009 Pully (CH)
(72) Inventor: JACOBSSON, Kristian, 247 51 Dalby (SE); ÅBERG, Frida, 114 42 Stockholm (SE); STRANDBERG, Stefan, 117 27 Stockholm (SE); CHAMBERLAIN, Nicola, 112 39 Stockholm (SE)
(74) Representative: Tetra Pak - Patent Attorneys SE

(57) **Abstract**

A package (1) for storing a food product is provided. The package (1) comprises a bottom part (3) formed by a thermoplastic material, a main body (2) formed by a packaging material, wherein the main body (2) is in the form of a sleeve comprising a top section (14) and a base section (12), said base section (12) being connected to the bottom part (3), wherein the top section (14) of the main body (2) is sealed transversally forming a fluid-tight closure of the package (1).

## Description

### Technical Field

The invention relates to a package for food products. More specifically the present invention relates to a package that allows for a reduction of food waste, especially when the package is filled with a liquid food product.

### Background Art

A wide selection of packages for pourable products, such as liquid or semi-liquid food products, are available on today's market. Examples include PET bottles, metal tubes, cardboard cups with lids, carton-based rectangular parallelepiped cartons, and bags with spouts.

The prior art packages successfully enclose and seal the liquid or semi-liquid food product inside the package, however they are often designed for the food content to be vacated into another container, such as a bowl or glass, before consumption. This step creates unnecessary use of natural resources, since some residue of the food product will often remain in the package out of reach for the consumer. Additionally, the used container will need to be washed or discarded after use. The user will also need to perform the additional step of moving the food product from the package to the container.

Although some packages exists that are designed to allow a consumer to eat or drink directly from the package, these prior art solutions all have drawbacks relating to the environmental impact with regard to food waste as well as not being particularly user-friendly.

There is therefore a need for an improved package for liquid or semi-liquid food products.

### Summary

It is an object of the invention to at least partly overcome one or more of the above-identified limitations of the prior art. In particular, it is an object to provide a package that reduces waste and is additionally faster and easier for the consumer to use.

To solve these objects a package for storing a food product is provided.
The package comprises a bottom part formed by a thermoplastic material, a main body formed by a packaging material, wherein the main body is in the form of a sleeve comprising a top section and a base section, said base section being connected to the bottom part, wherein the top section of the main body is sealed transversally forming a fluid-tight closure of the package.

In one embodiment, a separable joint is arranged between the top section and the base section to facilitate opening of the package by separation of the top section from the base section. The opening of the package using the separable joint reduces the amount of food waste compared to prior art solutions having caps or lids where food remains tends to get stuck. The opening that is created when the top section has been removed allows the user to add toppings such as cereals or sprinkles in the package itself without the need of pouring the food product into a separate bowl.

The separable joint may extend transversally across the main body.

In one embodiment, the separable joint is a perforation. This allows the user to open the package into an opening that has a size suitable to be eaten from.

The bottom part may have a circular shape. Having a circular shaped bottom also helps reducing the food waste, since it is easier for the user to access the food inside using for example spoon due to the lack of sharp edges and corners. The shape of the bottom part effects the shape of the opening of the package once the separable joint has been opened. The opening of the package preferably resembles the opening of a bowl or deep plate, and the opening is thus very suitable for receiving a spoon. Preferably, the food product is a semi-liquid food product.

In one embodiment, the main body is formed by a carton-based packaging material.

The bottom part may have a convex shape. In one embodiment, the exterior surface of the bottom part is provided with support elements. This allows the package to stand more stable in an upright position.

In one embodiment, the main body is formed by longitudinal sealing of a blank of packaging material, said blank comprising a first longitudinal crease line and a second longitudinal crease line arranged at a transversal distance from the first longitudinal crease line, the first and second crease lines defining panels arranged therebetween, and wherein said panels form first and second side walls of the package.

The blank may further comprise at least one panel crease line.

In one embodiment, a first panel crease line and a third panel crease line each have the form of an half positive U-shaped line which together form an positive U-shape when the blank is longitudinally sealed, and a second panel crease line has the form of an positive U-shape.

In one embodiment, the horizontal distance between the first panel crease line and the second panel crease line increases from a position near the top section of the main body towards the bottom part, and wherein the horizontal distance between the second panel crease line and the third panel crease line increases from a position near the top section of the main body towards the bottom part.

In a second aspect, a blank of packaging material is provided. The blank is formed by a packaging material for manufacturing a main body of a package according to the first aspect by longitudinal sealing of the blank, wherein the blank is essentially rectangular comprising a plurality of crease lines.

The blank may further comprise a first longitudinal crease line and a second longitudinal crease line arranged at a transversal distance from the first longitudinal crease line, the first and second crease lines defining panels arranged therebetween, and wherein said panels form first and second side walls of the package.

In one embodiment the blank further comprises at least one panel crease line, wherein a first panel crease line and a third panel crease line each have the form of an half positive U-shaped line which together form an positive U-shape when the blank is longitudinally sealed, and a second panel crease line has the form of an positive U-shape.

The blank may further comprise a joint defining the transition between a top section and a base section of the main body formed when the blank is sealed longitudinally.

In one embodiment, the joint is a perforation.

In a third aspect, a method for manufacturing a package is provided. The method comprises providing a bottom part formed by a thermoplastic material and providing a main body formed by a packaging material, wherein the main body is in the form of a sleeve comprising a top section and a base section, connecting the base section to the bottom part, filling the package with food product, and sealing the top section of the main body transversally forming a fluid-tight closure of the package.

The bottom part may be formed by injection moulding of the thermoplastic material simultaneously while joining the bottom part to the base section of the main body.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is an isometric front view of a package according to one embodiment,
Fig. 2 is a front view of a package according to one embodiment,
Fig. 3 is a side view of a package according to one embodiment,
Fig. 4 is an isometric front view of an open package according to one embodiment,
Fig. 5a is a top down view of a closed package according to one embodiment,
Fig. 5b is a top down view of an open package according to one embodiment,
Fig. 6 is an isometric front view of a package according to one embodiment,
Fig. 7 is a view of a blank that forms a main body of the package according to one embodiment; and
Fig. 8 is a schematic view of a method according to an embodiment.

### Detailed description

The disclosed embodiments will now be described more fully hereinafter with reference to the accompanying drawings, in which certain embodiments of the invention are shown. Like numbers refer to like elements throughout.

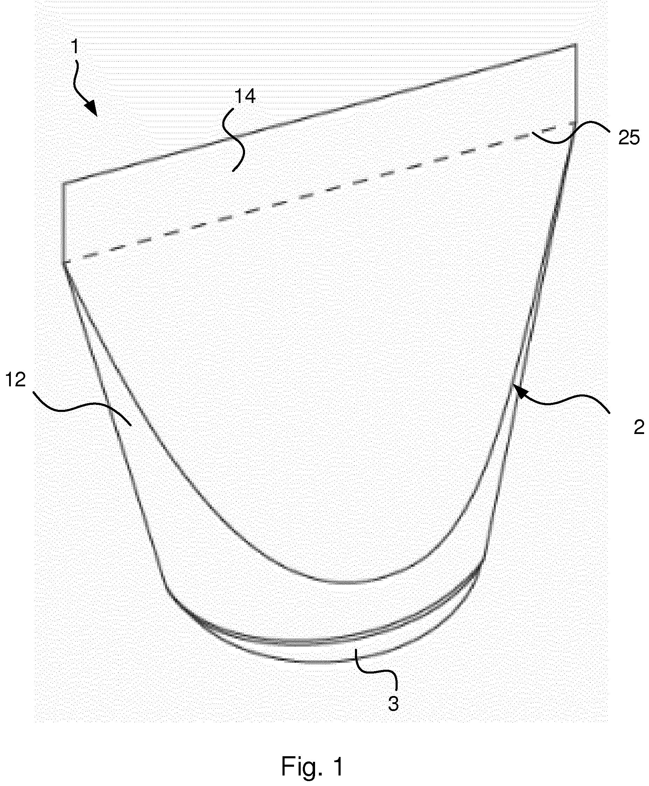

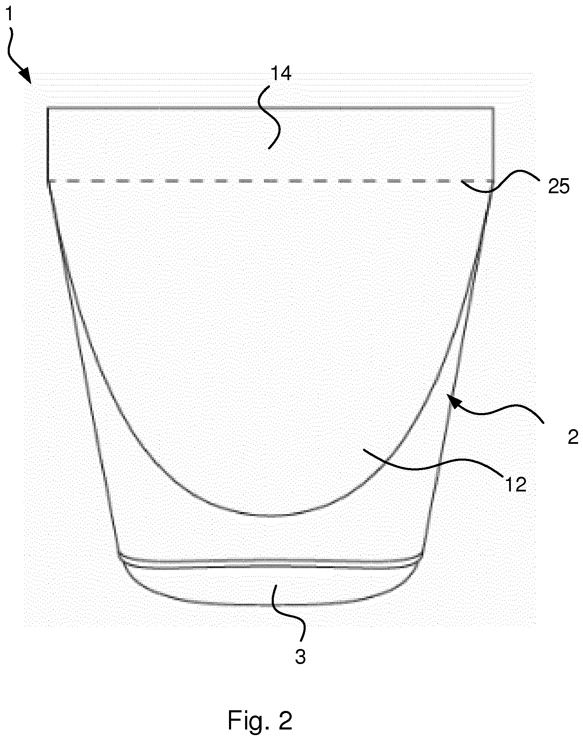

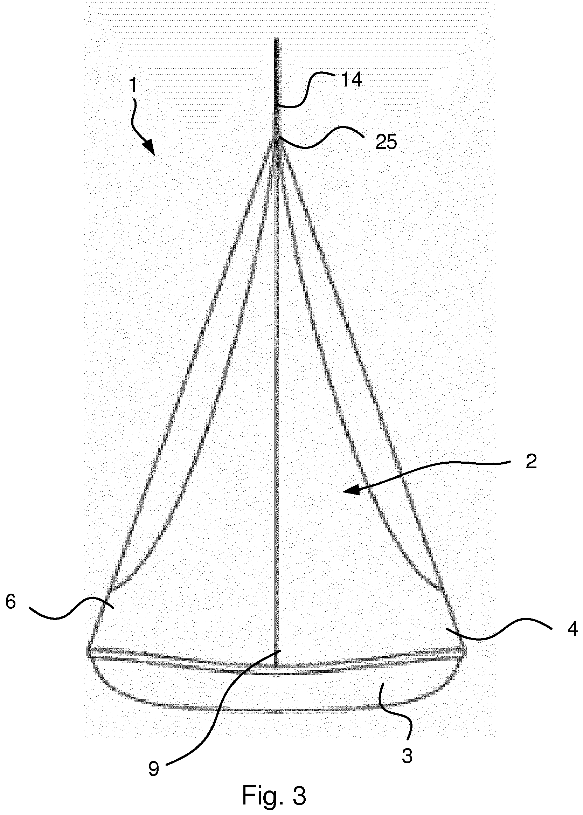

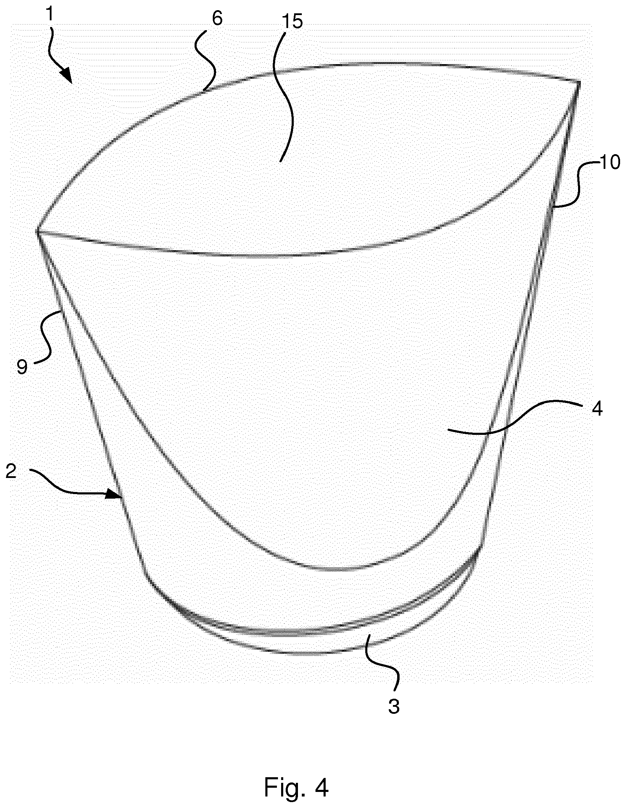

In the following, simultaneous reference to Figs. 1 to 5, all showing a package 1, will be given, where Figs. 1-3 illustrate a closed package 1 and Figs. 4-5 illustrate a package 1 that has been opened.

The package 1 described herein is preferably used for storing food products such as liquid food products, semi-liquid food products and/or solid food products. The package 1 is preferably used for storing semi-liquid food products, such as yoghurt, soup, smoothies, noodles, ice-creams etc. However, the package 1 could also be used to store liquid food products such as milk, juice, etc. or other food products such as pre-cooked fast-food, pasta, stews etc. The food product could also be a combination of liquid, semi-liquid and/or solid food. As will be described further below, the inventive package 1 is especially beneficial for food products that are eaten by a spoon. The opening of the package 1 is configured to resemble the opening of a bowl or deep plate, and the opening is thus very suitable for receiving a spoon. The opening also allows the user to add toppings such as cereals or sprinkles in the package 1 itself without the need of pouring the food product into a separate bowl or container. With appropriate design elements on the exterior, the package 1 may even be used as a high-end disposable plate or bowl.

The package 1 comprises a bottom part 3 and a main body 2, configured to be joined together to form the package 1. The main body 2 is preferably provided in the form of a sleeve, of which one end is attached to the bottom part 3. The main body 2 has a base section 12 and a top section 14;, whereby the base section 12 is joined to the bottom part 4.

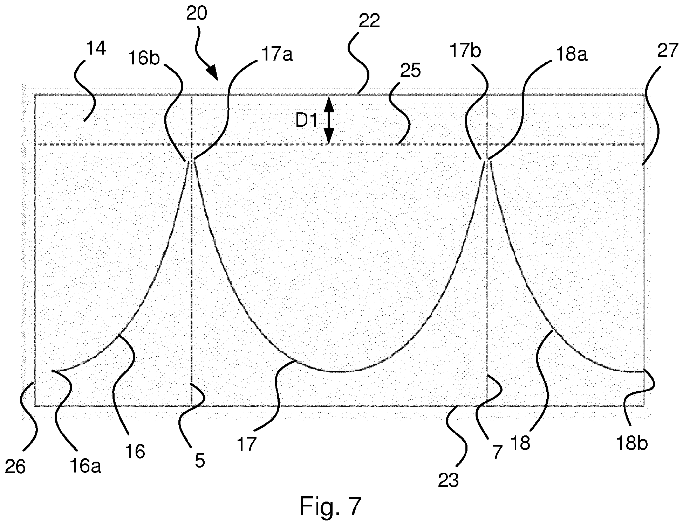

The main body 2 is made from a blank 20 (see Fig. 7) of a packaging material, such as a carton-based packaging material. The sleeve-shape is preferably realized by sealing two longitudinal edges of the blank 20 to each other. When attached to the bottom part 3 the main body 2 forms side walls 4, 6 enclosing the food product.

The top section 14 of the main body 2, i.e. the uppermost part of the walls 4, 6, is sealed transversally to form a fluid-tight closure of the package 1. A separable joint 25 is arranged between the top section 14 and the base section 12 to facilitate opening of the package 1 by separation of the top section 14 from the base section 12 of the main body 2.

Once the top section 14 is separated from the main body 2, an opening 15 is provided in the package 1 (see Fig. 4). The package 1 described herein thus removes the need of an additional cap or lid. This has both environmental and economical benefits. Having a package 1 without a cap or lid also has the benefit that it is more convenient to use since the risk of getting food remains on hands, clothing etc. is reduced when a sticky or messy cap/lid is removed.

As previously stated, the main body 2 is made from a packaging material in the form of a blank 20, preferably a packaging laminate comprising several layers. A core layer of the packaging laminate is carton-based. The carton-based packaging material may be a laminate material comprising several polymeric layers on both sides of a carton-based core layer. The carton-based material could be paper, paper board, carton or other similar fiber-based materials.

The carton-based material is preferably the core material of the packaging laminate material and having a surface coating of thermoplastics on at least one of its two surfaces. Such a surface coating could be polyethylene film (PE film), but other materials could also be used in combination, such as for instance aluminum foil. The packaging material may be refined to form sheets comprising individual blanks 20 which are then folded and joined together along a longitudinal seal to form the main body 2.

As can be seen in Fig. 1, the main body 2 forms the major volume of the package 1 and the bottom part 3 provides stability and structural rigidity to the main body 2. The different parts will now be described more in detail.

The main body 2 comprises sidewalls 4, 6. In the shown example a first, front, wall 4 and a second, back, wall 6 extend from the bottom part 3 towards the top section 14. The front wall 4 and the second back wall 6 are arranged on opposite sides from each other. The first wall 4 is laterally delimited by a first edge 9 and a second edge 10. The second wall 6 is also laterally delimited by the first edge 9 and the second edge 10. The first and second walls 4, 6 are thus connected to each other by the first edge 9 and the second edge 10. As will be later explained with reference to Fig. 7, the first and second edges 9, 10 are formed by folding along crease lines 5, 7.

The main body 2 can be seen as having a top section 14 and a base section 12, where the top section 14 is located at the upper part of the package 1 and the base section 12 constitutes the side walls 4, 6. Preferably, the top section 14 does not contain any of the enclosed product.

The side walls 4, 6 are connected to each other at the top section 14. The top section is preferably provided by transversal sealing of the packaging material of the main body 2, although other processes may be used to form the top section 14; the side walls 4, 6 could e.g. by fastened to each other by for example pressure and/or an adhesive material. The sealing of the top section 14 is such that a fluid-tight closure of the package 1 is formed.

In other words, the main body 2 has a sealed top section 14 and being connected to the bottom part 3 of the package 1 at its bottom end. The main body 2 extends vertically upwards from the bottom part 3. The walls 4, 6 of the main body 2are thus vertically inclined in a direction from the bottom part 3 to the top section 14 when the package 1 is closed.

As will be disused more with reference to Figs. 4-5, a separable joint 25 is arranged between the top section 14 and the base section 12 of the main body 2 to facilitate opening of the package 1 by separation of the top section 14 from the base section 12. Once the top section 14 is separated, an opening 15 is provided in the package 1.

The bottom end of the base section 12 is configured to be joined to the bottom part 3 of the package 1. The joining of the main body 2 to the bottom part 3 is preferably done by an injection moulding process.

The bottom part 3 is preferably made of a plastic material. The plastic material may for example be HDPE or a high density polyethylene, however other thermoplastic polymer materials are of course also conceivable.

The bottom part 3 may beneficially be manufactured by injection moulding. The material for the bottom part 3 may be injected into a mold where at least the lowermost part of the main body 2 is partially located such that the material of the bottom part 3 forms a bond with the material of the main body 2. When the material in the bottom part 3 becomes solid it will also contribute to maintaining the shape of the main body 2.

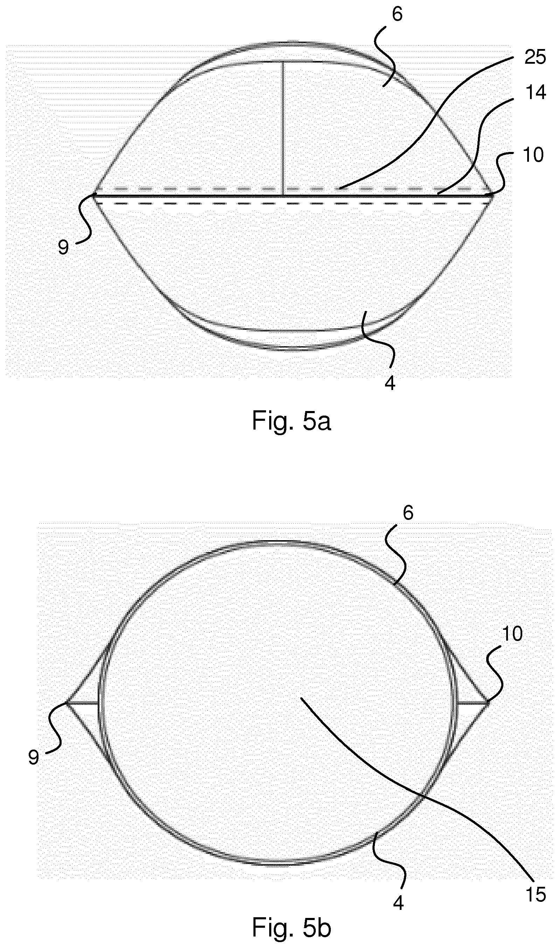

In a preferred embodiment, the shape of the bottom part 3 is such that it allows a user to eat the semi-liquid stored therein using a spoon in a user-friendly way. The bottom part 3 may thus have a similar shape as the bottom of a bowl or deep plate. In the embodiment shown in Figs. 1-4 (and more clearly shown in Figs. 5a-b, illustrating top views of the package 1), the bottom part 3 has a rounded or concave shape, seen from inside the package 1. The bottom part 3 may for example have a circular shape or an elliptical shape. In square-shaped bottom parts 3, food remains tends to get stuck in the corners. A rounded shape of the bottom thus helps preventing food waste, since it is harder for food remains to get stuck in rounded corners.

The bottom part 3 has a first side and a second side. The first side is the side facing the interior of the package 1, i.e. the side which is in contact with the food product. The second side is opposite of the first side, and forms the exterior surface of the bottom part 3.

It is beneficial if the first side of the bottom part 3 has a smooth surface. This allows the user of the package 1 to, using a spoon, more easily empty the package. This is thus another parameter that helps decreasing the amount of food waste, since it is easy for the user to eat/drink all the food in the package 1.

The bottom part 3 may be planar or rounded depending if the package 1 is closed or open. In one embodiment, the first side of the bottom part 3 has a concave shape when the package 1 is closed and when the package 1 is opened the first side of the bottom part 3 flattens out to a planar surface. In an alternative embodiment, the bottom part 3 is planar when the package 1 is closed and remains planar when the package 1 is opened. In yet an alternative embodiment, the bottom part 3 has a concave shape both when the package 1 is closed and opened.

In embodiments where the bottom part 3 has a round shape, the round shape may be a circle or an ellipse.

In one embodiment, the package 1 has a hull-shape when arranged in an open state. The bottom part 3 has a diameter being preferably equal to the diameter of the opening 15, if expanded to a circular shape. This allows the user to easily reach all the food products inside the package 1.

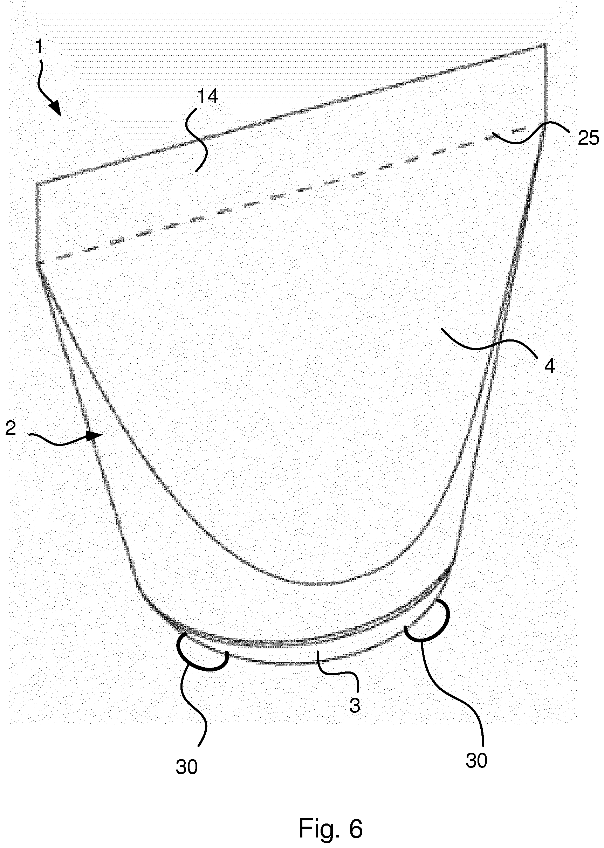

In one embodiment, as shown in Fig. 6, the bottom part 3 is arranged with support elements 30. The support elements 30 may be in the form of small protrusions that increases the ability of the package 1 to stand on a flat surface. This is especially beneficial in the situation where the first side of the bottom part 3 has a convex shape, since this shape may create difficulties in allowing the package to stand steadily.

The support elements 30 may comprise a plurality of protrusions. In the embodiment shown in Fig. 6, the support elements 30 comprises four protrusions. However, in some embodiments the number of protrusions may be two, three, five or similar. Preferably, the support elements 30 are arranged on the outer edges of the bottom part 3.

The support elements 30 may be constructed in different suitable materials, and more preferably the support elements 30 are made of the same material as the bottom part 3. In one embodiment, the support elements 30 are attached to the bottom part 3 using adhesive materials. In an alternative embodiment, the support elements are formed integral with the bottom part 3 during the injection moulding process of the bottom part 3.

In Fig. 7 an embodiment of a blank 20 is shown. The blank 20 is a piece of packaging material configured to be folded into packages or parts of packages such as the main body 2.

The blank 20 comprises crease lines 5, 7, 16-18, which facilitates and serves as templates for the folding of the blank 20 into a desired shape of the main body 2. The blank 20 is preferably of a rectangular shape. It is to be understood that while only single blanks 20 are shown, blanks 20 can be provided as a web of continuous packaging material, whereby consecutive blanks are arranged side by side or in any other orientation on the web.

The blank 20 comprises a first longitudinal edge 26, a second longitudinal edge 27, a top edge 22 and a bottom edge 23. The first edge 26 and the second edge 27 are arranged opposite to each other. Moreover, the top edge 22 and the bottom edge 23, are arranged opposite to each other.

As already mentioned, the main body comprising two walls are manufactured from a blank 20. Since the walls 4, 6 are formed by the blank 20, the top section 14 and the base section 12 of the main body 2 can be seen as the top section 14 and the base section 12 of the blank 20 itself. The base section 12 covers the area which is not part of the top section 14. The top section 14 is arranged in conjunction to the top edge 22 of the blank 20. The top section 14 may be seen as extending a distance D1 from the top edge 22 of the blank towards the base section 12 of the blank 20. The base section 12 extends from a distance D1 from the top edge 22 of the blank to the bottom edge 23 of the blank.

Once the package is assembled, the top section 14 is sealed to form a fluid-tight closure of the package 1.

As previously mentioned, the blank 20 further comprises crease lines 5, 7, 16-18 which may be formed into corresponding folds or edges in the main body 2.

A first longitudinal crease line 5 and a second longitudinal crease line 7, extending along the entire height of the base section 12, are arranged at a transversal distance from each other. The first and second crease lines 5, 7 define panels arranged therebetween, and these panels form the first and second side walls 4, 6 of the package 1.

A first and a third panel crease line 16, 18 are provided at the first panel corresponding to the second wall 6 of the folded main body 2. A second panel crease line 17 is provided at the second panel corresponding to the first wall 5 of the folded main body 2.

In other words, the second panel may be divided into a first part and a second part on separate sides of the blank 20 and being configured to be joined together to form the second wall 6 when the blank 20 is sealed longitudinally. It should be realized that each of the walls 4, 6 could be divided into two parts in a similar manner.

In the embodiment shown in Fig. 7, the second panel crease line 17 has the form of a parabolic shape such that it takes the form of an positive U-shaped line. The first and the third panel crease lines 16, 18 together form, when folded, a parabolic shape with the form of an positive U-shaped line. Hence, the first panel crease line 16 has the form of a half parabolic line and the third panel crease line 18 has the form of a half parabolic line.

The horizontal distance between the first and second panel crease lines 16, 17 increases from a position near the top portion of the blank 20 towards the bottom portion of the blank 20. That is, a horizontal line across the surface of the blank 20 from the first panel crease line 16 to the second panel crease line 17 will become progressively longer from the top approaching the bottom end of the main body 2.

The horizontal distance between the second and third panel crease lines 17, 18 also increases from a position near the top portion of the blank 20 towards the bottom portion of the blank 20. Preferably, the width between the first and second panel crease lines 16, 17 and the width between the second and third panel crease lines 17, 18 measured on a certain height above the bottom edge 23 of the blank 20 is essentially the same.

In other words, the first and second panel crease lines 16, 17, and the second and third panel crease lines 17, 18 respectively, are arranged such that they are closer together towards the top and further apart towards the bottom of the blank 20.

The first panel crease line 16 is arranged such that its first end 16a is close to the first edge 26 of the blank 20 and its second end 16b is close to a first end 17a of the second panel crease line 17. The first end 16a of the first panel crease line 16 is arranged at a distance closer to the bottom edge 23 of the blank than the second end 16b of the first panel crease line 16.

The third panel crease line 18 is arranged such that its first end 18a is close to a second end 17b of the second panel crease line 17 and its second end 18b is close to the second edge 27 of the blank 20. The second end 18b of the third panel crease line 18 is arranged at a distance closer to the bottom edge 23 of the blank 20 than the first end 18a of the first panel crease line 18.

The first end 17a and the second end 17b of the second panel crease line 17 is preferably arranged at the same distance from the top edge 22 of the blank 20. The first end 17a of the second panel crease line 17 is arranged in close conjunction to the second end 16b of the first panel crease line 16, and the second end 17b of the second panel crease line 17 is arranged in close conjunction to the first end 18a of the third panel crease line 18.

The panel crease lines 16, 17, 18 are arranged such that they create a unique shape that allows for an extended frontal branding space. Due to the vast numbers of food products in the shelfs in food stores today it is important to have a package which has a great area for branding in order to gain the customers attention.

The blank 20 comprises a joint 25 being arranged between the base section 12 and the top section 14 of the main body 2. The joint 25 is separable to facilitate the opening of the package 1 by separation of the top section 14 from the base section 12. In other words, the top section 14 and the base section 12 of the main body 2 are configured to be joined together in a separable joint such that the top section may be removed from the base section of the main body.

The separable joint 25 could be designed with a weakening, such as a perforation or any other kind of tear-off membranes.

The separable joint 25 extends in a mainly horizontal direction between the first edge 26 and the second edge 28 of the blank 20. In order to open the package 1 completely, the separable joint 25 preferably extends along the whole length of the blank 20. Hence, the length of the separable joint 25 is preferably the same as the length of the blank 20 (i.e. the length of the top edge 22 and/or the bottom edge 23).

In one embodiment, as seen in Fig. 7, the separable joint 25 extends in a horizontal line from the first edge 26 to the second edge 28. In this embodiment, the separable joint 25 is arranged at a distance D1 from the top edge 22 of the blank 20. The distance may typically be in the range of 0.5 - 3 cm.

In an alternative embodiment, the separable joint 25 has a parabolic shape. The parabolic shape is such that it takes the form of an positive U-shaped line. In this embodiment, the center point of the separable joint 25 is arranged at a center distance from the top edge 22 of the blank 20 and the edge points are arranged at an edge distance from the top edge 22 of the blank 20. The center distance is larger than the edge distance. In other words, the minimum point of the parabolic line is arranged below the end points of the line, i.e. closer to the bottom section 12. As would be evident to a skilled person, the geometry of the separable joint 25 could also take other forms.

The package 1 described herein can easily be modified to create a range of packages having different sizes and dimensions. The dimensions of the bottom part 3 and/or the dimensions of the walls 4,6 may be altered to suit different food products.

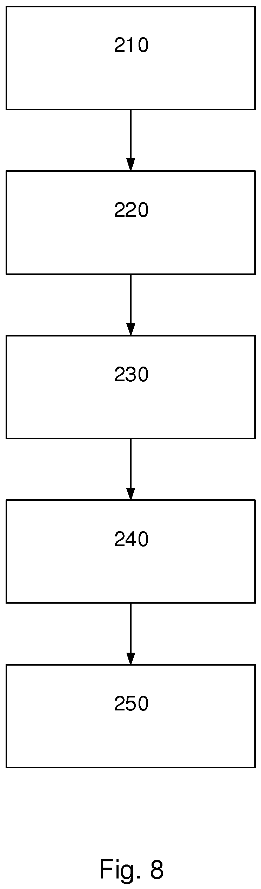

A method 200 for manufacturing a package 1 will now be described with reference to Fig. 8. The method comprises providing 210 a bottom part 3 formed by a thermoplastic material and providing 220 a main body 2 formed by a packaging material. The main body 2 is in the form of a sleeve comprising a top section 14 and a base section 12.

The method further comprises a step of connecting 230 the base section 12 to the bottom part 3. In a next step the package 1 is filled 240 with food product. The method further comprises the step of sealing 250 the top section 14 of the main body 2 transversally forming a fluid-tight closure of the package 1.

The bottom part 3 is formed by injection moulding of the thermoplastic material simultaneously while joining the bottom part 3 to the base section 12 of the main body 2.

From the description above follows that, although various embodiments of the invention have been described and shown, the invention is not restricted thereto, but may also be embodied in other ways within the scope of the subject-matter defined in the following claims.

## Claims

1. A package (1) for storing food product, the package (1) comprising:
a bottom part (3) formed by a thermoplastic material,
a main body (2) formed by a packaging material, wherein the main body (2) is in the form of a sleeve comprising a top section (14) and a base section (12), said base section (12) being connected to the bottom part (3),
wherein the top section (14) of the main body (2) is sealed transversally forming a fluid-tight closure of the package (1).

2. The package (1) according to claim 1, wherein a separable joint (25) is arranged between the top section (14) and the base section (12) to facilitate opening of the package (1) by separation of the top section (14) from the base section (12).

3. The package (1) according to claim 2, wherein the separable joint (25) extends transversally across the main body (2).

4. The package (1) according to claim 2 or 3, wherein the separable joint (25) is a perforation.

5. The package (1) according to any one of the preceding claims, wherein the bottom part (3) has a circular shape.

6. The package (1) according to any one of the preceding claims, wherein the main body (2) is formed by a carton-based packaging material.

7. The package (1) according to any one of the preceding claims, wherein the bottom part (3) has a convex shape.

8. The package (1) according to claim 8, wherein the exterior surface of the bottom part (3) is provided with support elements (30).

9. The package (1) according to any one of the preceding claims, wherein the main body (2) is formed by longitudinal sealing of a blank (20) of packaging material, said blank (20) comprising:
a first longitudinal crease line (5) and a second longitudinal crease line (7) arranged at a transversal distance from the first longitudinal crease line (5), the first and second crease lines (5, 7) defining panels arranged therebetween, and wherein said panels form first and second side walls (4, 6) of the package (1).

10. The package (1) according to claim 9, wherein the blank (20) further comprises at least one panel crease line (16, 17, 18).

11. The package (1) according to claim 10, wherein a first panel crease line (16) and a third panel crease line (18) each have the form of an half positive U-shaped line which together form an positive U-shape when the blank (20) is longitudinally sealed, and a second panel crease line (17) has the form of an positive U-shape.

12. The package (1) according to claim 11, wherein the horizontal distance between the first panel crease line (16) and the second panel crease line (17) increases from a position near the top section (14) of the main body (2) towards the bottom part (3), and wherein the horizontal distance between the second panel crease line (17) and the third panel crease line (18) increases from a position near the top section (14) of the main body (2) towards the bottom part (3).

13. A blank (20) formed by a packaging material for manufacturing a main body (2) of a package (1) according to any one of the preceding claims by longitudinal sealing of the blank (20), wherein the blank (20) is essentially rectangular comprising a plurality of crease lines (5, 7, 16, 17, 18).

14. The blank (20) according to claim 13, further comprising a first longitudinal crease line (5) and a second longitudinal crease line (7) arranged at a transversal distance from the first longitudinal crease line (5), the first and second crease lines (5, 7) defining panels arranged therebetween, and wherein said panels form first and second side walls (4, 6) of the package (1).

15. The blank (20) according to claim 13 or 14, further comprising at least one panel crease line (16, 17, 18), wherein a first panel crease line (16) and a third panel crease line (18) each have the form of an half positive U-shaped line which together form an positive U-shape when the blank (20) is longitudinally sealed, and a second panel crease line (17) has the form of an positive U-shape.

16. The blank (20) according to any one of claims 13-15, further comprising a joint (25) defining the transition between a top section (14) and a base section (12) of the main body (2) formed when the blank (20) is sealed longitudinally.

17. The blank (20) according to any one of claims 13-16, wherein the joint (25) is a perforation.

18. A method (200) for manufacturing a package (1), comprising
providing (210) a bottom part (3) formed by a thermoplastic material,
providing (220) a main body (2) formed by a packaging material, wherein the main body (2) is in the form of a sleeve comprising a top section (14) and a base section (12),
connecting (230) the base section (12) to the bottom part (3),
filling (240) the package (1) with food product, and
sealing (250) the top section (14) of the main body (2) transversally forming a fluid-tight closure of the package (1).

19. The method (200) according to claim 18, wherein the bottom part (3) is formed by injection moulding of the thermoplastic material simultaneously while joining the bottom part (3) to the base section (12) of the main body (2).
